# EUROPEAN PATENT APPLICATION

(11) **EP 4 468 453 A1**
(43) Date of publication of application: **27.11.2024**
(21) Application number: 23174680.1
(22) Date of filing: 22.05.2023
(51) Int. Cl.: H01M 10/613, H01M 10/6555, H01M 10/6557, H01M 10/647, H01M 50/471

(54) **THERMAL BARRIER AND THERMAL FIN FOR A BATTERY APPARATUS**

(71) Applicant: Newfrey LLC, New Britain, CT 06053 (US)
(72) Inventor: AKBARINIA, Alireza, 35394 Gießen (DE); WISSLING, Matthias, 35394 Gießen (DE)
(74) Representative: SBD IPAdmin

(57) **Abstract**

Thermal fin comprising a thermal barrier and thermal barrier (16) for a battery apparatus (10) configured to prevent or delay thermal propagation between battery pack subassemblies, the thermal barrier (16) comprising a spacer arrangement (24) with at least one intermediate plate having a first surface and a second surface opposite the first surface, a first plurality of spacers (28) extending from the first surface and a second plurality of spacers (30) extending from the second surface.

## Description

The present invention relates to a thermal barrier and a thermal fin for a battery apparatus configured to prevent thermal propagation between battery pack subassemblies.

The field to which the disclosure generally relates includes methods and assemblies for thermal management of the temperature of battery components and thermal safety features for limiting cell-to-cell thermal propagation within a battery. More particularly, but not exclusively, the invention can be used within a battery module having a number of electrically interconnected battery cells.

In the present context, the terms "battery cell", "battery module", "battery section", and "battery pack" (as well as their shortened variants "cell", "module", "section", and "pack") are used to describe different levels of components of an overall battery assembly. For example, numerous individual battery cells form the building blocks of battery modules. Multiple battery modules (in conjunction with ancillary equipment) in turn make up a battery pack.

For purposes of this application, a cell is the smallest unit of a battery pack that includes a single anode electrical connection and single cathode electrical connection on the exterior or a sealed housing that contains one or more pairs of anode and cathode elements. A cell is a single electrochemical unit, whereas a battery is made up of one or more electrically interconnected cells joined in series, parallel or both, depending on desired output voltage, current or capacity.

A battery apparatus may include one or more battery packs suitably sized to provide electrical power to the vehicle. Battery packs are made up of battery sections which may be made up of numerous battery modules each of which is in turn made up of one or more battery cells that deliver electrical current to a load. The battery cells are electrically interconnected.

Battery packs are made up of sections which may be made up of numerous battery modules each of which is in turn made up of one or more battery cells that deliver electrical current to a load. The number of battery cells within the larger battery module, section, pack or related structure will be appreciated by those skilled in the art to coincide with the power needs of the device receiving electric current from the battery, as well as the thermal operating requirements of the cells within the battery. In such batteries, current flow, both charge and discharge, generates heat inside the cells and in their interconnection systems.

Electric Vehicles (EVs) use lithium-ion batteries comprised of cells. The performance of a lithium-ion battery cell is very dependent on its temperature. When overheated, the cells can experience degraded electrical performance, damage, and reduced lifespan. Thus, lithium-ion batteries require thermal management systems to maintain a constant temperature with very low temperature deviations (the temperature distribution over a cell should be uniform with a maximum deviation of less than 5°C) so that they can operate efficiently without damages or failures.

Additionally, lithium-ion batteries may experience a failure called thermal runaway. The term thermal runaway event refers to an uncontrolled increase in temperature in a battery system. Thermal runaway is a chain reaction within a battery cell that can be very difficult to stop once it has started. It occurs when the temperature inside a battery reaches the point that causes a chemical reaction to occur inside the battery. This chemical reaction produces even more heat, which drives the temperature higher, causing further chemical reactions that create more heat. During a thermal runaway event, the generation of heat within a battery system or a battery cell exceeds the dissipation of heat, thus leading to a further increase in temperature. A thermal runaway event may be triggered by various conditions, including a short circuit within the cell, improper cell use, physical abuse, manufacturing defects, or exposure of the cell to extreme external temperatures.

One of the important issues in the construction of an electric vehicle is the thermal management and thermal safety systems of the battery (notably lithium-ion batteries have been widely used in electric vehicles).

Thermal management is essential for the performance and operating life of electric vehicle batteries and several studies, disclosures, and patent documents deal with this issue.

In this application "thermal management" function and objective shall mean maintaining a battery and its individual subassemblies withing desired temperature limits (minimum and maximum) and within a desired variation (ΔT) band from one subassembly to another. "Thermal safety" function shall mean limiting heat propagation between battery subcomponents, in particular from cell to cell, with the objective of preventing a thermal runaway event.

JP2009163932 discloses a heat insulating cushioning member arranged between stacked battery cells. The heat insulating cushioning member is made of a sheet of polycarbonate resin or polypropylene resin and can be provided with grooves.

JP2020072005A is directed to a heat transfer suppressing sheet for batteries. JP2020072005A discloses an arrangement comprising two flat sheets made of a heat absorbing or insulating material and a corrugated sheet extending between the two flat sheets.

However, there is still a need to provide a thermal barrier or a thermal fin between two adjacent battery cells which is lightweight, easy to manufacture, has a compact design and a high thermal resistance.

Accordingly, the present invention provides a thermal barrier according to claim 1. More particularly, the thermal barrier comprising a spacer arrangement with at least one intermediate plate having a first surface and a second surface opposite the first surface, a first plurality of spacers extending from the first surface and a second plurality of spacers extending from the second surface.

The at least three layers with the first and second plurality of spacers between two battery cells provide a minimum of thickness and air gaps between the cells without increasing the size of the gap between the two cells. The different interfaces help reducing significantly the heat transfer. The spacers are discontinuous elements.

In an embodiment, the intermediate plate and/or the first plurality of spacers and/or the second plurality of spacers are made in mica or paper material. The mica and paper are lightweight material and allow a low thermal conductivity. More particularly, with these materials a thermal conductivity of about 0.001W/mK can be achieved.

In an embodiment, the thermal barrier further comprises a first and a second barrier plate, the spacer arrangement extending between the first and second barrier plates, wherein the first and second barrier plate each comprises an internal surface facing the spacer arrangement and an external surface, opposite the internal surface, and wherein the first barrier plate and/or the second barrier plate is made in mica or paper material.

The first barrier plate is destined to be adjacent to a first battery cell, the second barrier plate is destined to be adjacent to a second battery cell. The at least three plates (first and second barrier plates plus intermediate plate) with the first and second plurality of spacers between two battery cells provide a satisfactory thickness and air gaps between the cell without increasing the size of the gap between the two cells. The different interfaces help reducing significantly the heat transfer.

In an embodiment, the thermal barrier comprises at least one insulated component. For instance, the outer surface of the thermal barrier can be electrically insulated. For instance, the first and second barrier plate each comprises an internal surface facing the spacer arrangement and an external surface, opposite the internal surface, and wherein the external surface is electrically insulated. In another embodiment, only one surface is electrically insulated. In another embodiment, the electrically insulated component can extend between the first barrier plate and the spacer arrangement. The electrical insulation avoids any electrical short circuit.

In an embodiment the first barrier plate and/or the second barrier plate is made in mica or paper material. In an embodiment, the entire thermal barrier is made of mica and/or paper material. The mica and paper are lightweight material and allow a low thermal conductivity. More particularly, with these materials a thermal conductivity of about 0.001W/mK can be achieved.

In an embodiment, the thermal barrier comprises up to ten (10) intermediate plates and a plurality of spacers extends between two adjacent intermediate plates. The thermal barrier can be easily adapted depending on the size, thermal propagation needs, ...

In an embodiment, the thermal barrier forms an entity satisfying the following condition: weight per unit area < 20g/cm², and density< 200 g/cm³. This ensures that the thermal barrier does not increase the weight of a battery sub-assembly.

In an embodiment, the spacers of the first and/or second plurality of spacers are strips distributed between the first or second barrier plate and one intermediate plate. In an embodiment, the spacer strips have a width between 1 and 5 mm, a thickness between 100 and 300 micrometers and a length corresponding to the length of the battery cells which can be between 50 and 1000mm. The strips can easily be arranged between the plates and create air gap channels. The strips can be evenly distributed or non-uniformly distributed. For instance, for pouch cells, a uniform distribution of the spacers is preferred. For prismatic cells, a non-uniform distribution of the spacers is preferred.

In an embodiment, the spacers of the first and/or second plurality of spacers comprise a circular shape and are evenly distributed. The spacer with circular shape acts as a wedge and provide an increased air gap surface.

In an embodiment, the spacers of the first plurality of spacers arranged between the first barrier plate and one intermediate plate are arranged above or below the spacers of the second plurality of spacers. In other words, each spacer of the first plurality of spacers is aligned one below another spacer of the second plurality of spacers, the at least one intermediate plate being arranged between one spacer of the first plurality of spacers and one spacer of the second plurality of spacers. The spacers are stacked one below the other, which increase the stiffness of the structure.

In an embodiment, the spacers of the first plurality of spacers are staggered with regard to the spacers of the second plurality of spacers. Thus, the heat transfer decreases, since there is no continuity of material in a direction normal to the plates plane.

In an embodiment, the first and/or the second barrier plate and/ or the intermediate plate is between 50 and 300 µm thick. In an embodiment, each spacer is between 100 and 300 µm thick. The thickness of the plates and spacer allow stacking several layers without increasing the size of the thermal barrier.

In an embodiment, the spacers are thicker than the first and/or the second barrier plate and/ or the intermediate plate. This guarantees a correct the air gap between the plates. The plates stabilize the assembly.

In an embodiment, the thermal barrier comprises a thermally conductive plate arranged between the first barrier plate and the spacer arrangement and/or second between the second barrier plate and the spacer arrangement. The thermally conductive plate is for instance made of copper or graphite. And is adapted to transfer heat in the heat plane to a cooler for instance, such as to limit the heat transmission in a direction orthogonal to a plate plane.

In an embodiment, the spacer arrangement comprises at least three intermediate plates. The three intermediate plates allow to realize a compact thermal barrier with an adequate thermal resistance. In an embodiment, the spacer arrangement comprises one to ten intermediate plates and between each intermediate plate a plurality of spacers.

The present invention is also directed to a thermal fin for a battery apparatus configured to prevent thermal propagation between battery pack subassemblies, the thermal fin comprising a first contact unit adapted to be in facing contact with a first battery pack subassembly; a second contact unit adapted to be in facing contact with a second battery pack subassembly, and a thermal barrier as disclosed above is sandwiched between the first and the second contact unit.

Such a sandwiched structure provides a low thermal resistance in the plane of the plates, but a good thermal resistance in a direction normal to the plate plane (across the thickness of the thermal barrier). The sandwiched structure allows cooling of individual cells while insulting one cell from an adjacent cell.

The invention and its advantages will be better understood from the reading of the following description, given by way of example only and with reference to the accompanying drawings, of which:
Fig. 1 shows schematically a first battery cell, a second battery cell, a thermal barrier according to the invention arranged between the first and the second battery cells and a bottom plate;
Fig. 2 shows a schematical cross-section view of a first embodiment of a thermal barrier according to the invention;
Fig. 3 shows schematical cross-section view of a second embodiment of a thermal barrier according to the invention;
Fig. 4A and Fig. 4B show two cross-section views of a thermal barrier according to a third embodiment of the invention;
Fig. 5A and Fig. 5B show two cross-section views of a thermal barrier according to a fourth embodiment of the invention;
Fig. 6A and fig. 6B two cross-section views of a thermal barrier according to a fifth embodiment of the invention;
Fig. 7A and Fig. 7B show two different embodiments of a thermal fin comprising a thermal barrier according to the invention;
Fig. 8 shows a thermal barrier according to a sixth embodiment of the invention;
Fig. 9 is a graph showing a temperature progress rate in a first battery cell and in its adjacent battery cell when a thermal barrier according to the second embodiment is arranged between first and second cells.

The embodiments of the disclosure will be best understood by reference to the drawings, wherein the same reference signs designate identical or similar elements.

It will be readily understood that the components of the disclosed embodiments, as generally described and illustrated in the figures herein, could be arranged and designed in a wide variety of different configurations. Thus, the following detailed description of the embodiments of the systems and methods of the disclosure is not intended to limit the scope of the disclosure, as claimed, but is merely representative of possible embodiments of the disclosure. In addition, the steps of a method do not necessarily need to be executed in any specific order, or even sequentially, nor need the steps be executed only once, unless otherwise specified.

In some cases, well-known features, structures, or operations are not shown or described in detail. Furthermore, the described features, structures, or operations may be combined in any suitable manner in one or more embodiments. It will also be readily understood that the components of the embodiments, as generally described and illustrated in the figures herein, could be arranged and designed in a wide variety of different configurations.

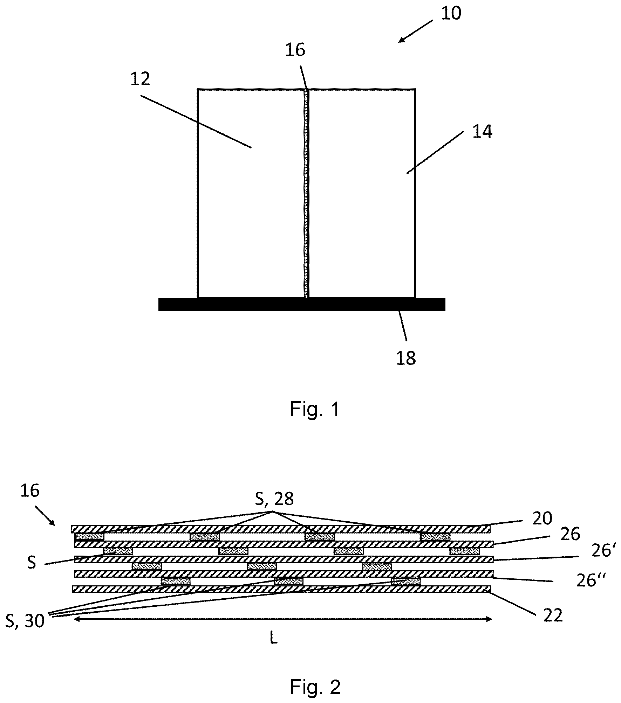

Fig. 1 shows an end view of a battery sub-assembly 10 comprising a first battery cell 12, a second battery cell 14, a thermal barrier 16 and a bottom plate 18. The thermal barrier 16 is stacked between the first and the second battery cells 12, 14. The thermal barrier 16 and the two battery cells 12, 14 are disposed on the bottom plate 18. The thermal barrier 16 may be glued to the first and second battery cells or fixed between the cells by compression for instance.

The first and second battery cells 12, 14 are for example prismatic cells or pouch cells or blade cells. The bottom plate 18 may be an aluminium plate adapted to transfer heat to a cooler or may directly be a cooler. The aluminium plate can have a thickness of about 10 micrometres (µm). In a known manner, the cooler can be sensibly flat and can comprise several layers, for example a thermal pad, a cold plate, a fluid channel transporting a coolant, ...

The first and second battery cells 12, 14 have each a main surface extending in a plane and the thermal barrier 16 can be in surface contact with the main surface of the first and second battery cells 12, 14.

More particularly, as visible in Fig. 2, the thermal barrier 16 comprises a first and a second barrier plate 20, 22. A spacer arrangement 24 extends between the first and second barrier plates 20, 22. More particularly, the first and second barrier plates 20, 22 each comprises an internal surface facing the spacer arrangement 24 and an external surface opposite the spacer arrangement 24. The external surfaces of the first and second barrier plates are electrically insulated. For instance, the first and second barrier plates 20, 22 may be made in an electrically insulated material which has a low thermal conductivity and is light in weight.

For instance, the first thermal barrier plate 20 is made in a paper material or in a material comprising or consisting of mica. The second barrier plate 20 is made in a material with low thermal conductivity, and which is lightweight. For instance the second thermal barrier plate 20 is made in a paper material or in a material comprising or consisting of mica.

The spacer arrangement 24 comprises for instance at least one intermediate plate 26, a first plurality of spacers 28 extending between the first barrier plate 20 and the intermediate plate 26. The spacer arrangement 24 further comprises a second plurality of spacers 30 extending between the second barrier plate 22 and the intermediate plate 26. The first plurality of spacers 28 ensures a gap between the first barrier plate 20 and the intermediate plate 26. The second plurality of spacers 30 ensures a gap G between the second barrier plate 22 and the intermediate plate 20.

The spacers S may be made with the same material than the barrier plates. Thus, the spacers may be made of paper or in a material comprising or consisting of mica. In a similar fashion, the intermediate plate may be with the same material than the barrier plates. Thus, the intermediate plate may be made of paper or in a material comprising or consisting of mica.

The barrier plates and spacer arrangement may consist entirely of paper or paper-based material, or entirely of mica or mica-based material. In another embodiment, the barrier plates and spacer arrangement may comprise both mica and paper material, with for instance the spacer arrangement in a first material and the barrier plates in a second material, ...

As represented in Fig. 2, the thermal barrier comprises three intermediate plates 26, 26', 26", and a plurality of spacers S arranged between all the intermediate plates 26, 26', 26" and the first and second barrier plates 20, 22. In another embodiment, the thermal barrier may comprise up to ten intermediate plates.

The first and or second barrier plates 20, 22 may have a thickness between 10 and 130µm. More particularly, the first and second barrier plates 20, 22 may have a thickness of 50 µm. Such thickness allows an electrical insulation sufficient for the battery cells to prevent electrical short circuit. The intermediate plates 26, 26', 26" may each have a thickness between 50 and 300 µm. The spacers S may each have a thickness between 100 and 300 µm. More particularly, the thickness of the spacers S is greater than the thickness of the plates 20, 22, 26, 26', 26". The spacers S may have a thickness of about 180µm to 250µm.

The thermal barrier 16 may present a width w between 50 and 300mm and a length L between 50 and 1000mm. More particularly, the size of the thermal barrier 16 depends on the size of the battery cells, such that the greater outer surface of the battery cell can be covered by the thermal barrier 16.

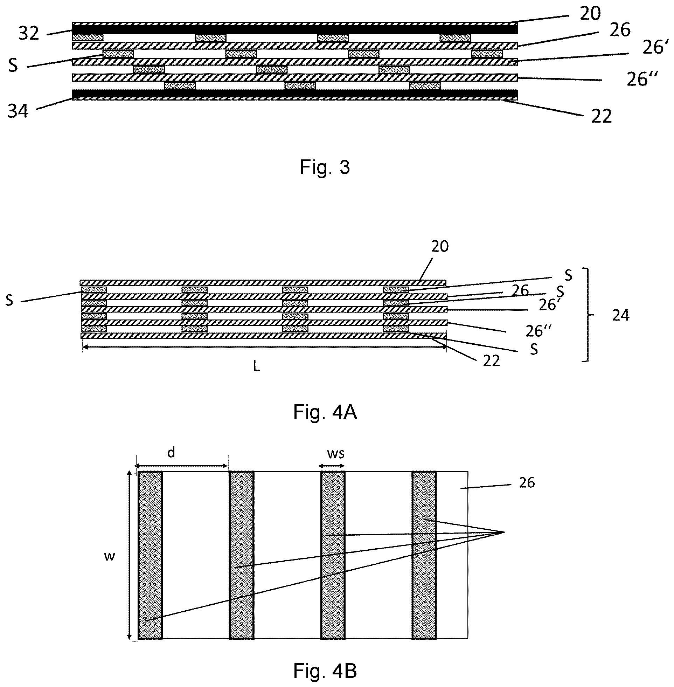

As depicted in Fig. 3, a first thermally conductive plate 32 can be arranged between the first barrier plate 20 and the spacer arrangement 24. In a similar way, a second thermally conductive plate 34 can be arranged between the second barrier plate 22 and the spacer arrangement 24. The thermally conductive plates 32, 34 are for instance made in a material allowing a thermal conductivity of 100 to 3000W/mK, and in particular 400 to 500W/mK. The first and/or second thermally conductive plates 32, 34 can be made in graphite or copper. The first and/or second thermally conductive plates 32, 34 can each have a thickness between 50 and 1000µm.

The spacers S can be strips, as depicted for instance in Fig. 4B. More particularly, the spacers S can be strips evenly arranged on the intermediate plate 26, 26', 26". The strips can each have a width ws between 1 and 5 mm, and more particularly between 1 mm and 1.5 mm. The strips can be arranged at a distance d of at least 5 mm from each other, in order to guarantee the stiffness of the thermal barrier 16 and the presence of the air gaps G generated by the spacers S.

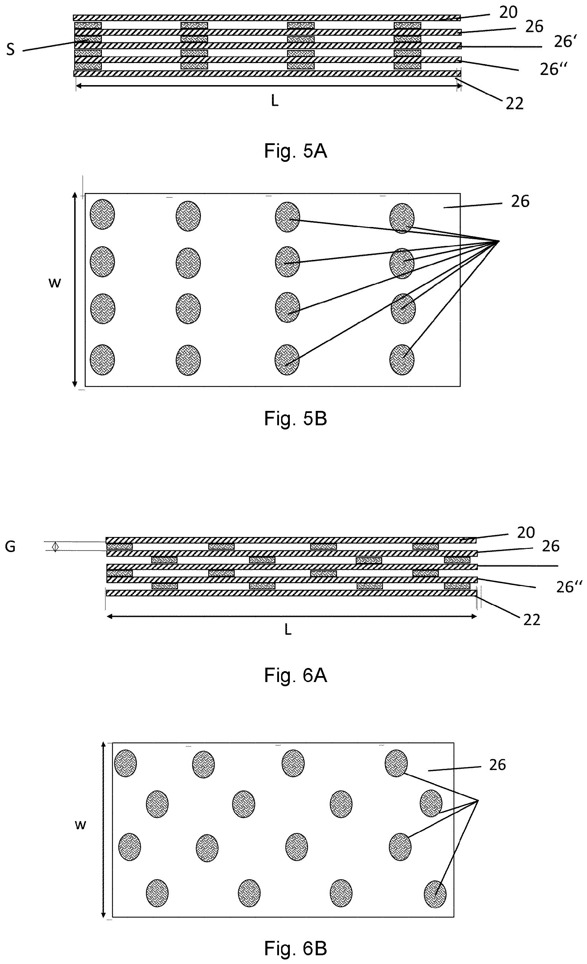

The spacers S can also have a circular shape, as depicted in Fig. 5B.

The first plurality of spacers 28 can be similar or sensibly similar to the second plurality of spacers 30. In another embodiment, the first plurality of spacer can have a shape or a number different than the second plurality of spacers.

As visible in Fig. 4A, the spacers S are all similar strips, and spacers of the second plurality of spacers are aligned one below another spacer of the first plurality of spacers. In other words, the spacers between two plates are stacked below each other.

In another embodiment, visible in Fig. 2, the spacers S are staggered with regard to the spacers of another layer.

As visible in fig. 5A and Fig. 5B, the spacers S are of circular shape and are stacked one below another.

In Fig. 6A and Fig. 6B, the spacers S are of circular shape and are staggered, such that one spacer of a first plurality of spacer is not below or above a spacer of a second plurality of spacers.

The thermal barrier 16 as mentioned above is from outside electrically isolated. It has a low weight. For instance, the thermal barrier presents a weight per unit area inferior to 0.20g/cm², and more particularly of about 0.10 to 0.12 g/cm². The thermal conductivity of the thermal barrier 16 is of about 0.001W/mK.

The thermal barrier 16 can be integrated to form a thermal fin. More particularly, a first and a second contact unit 36, 38 can be fixed to the thermal barrier 16, such that the contact units and the thermal barrier form a thermal fin 40.

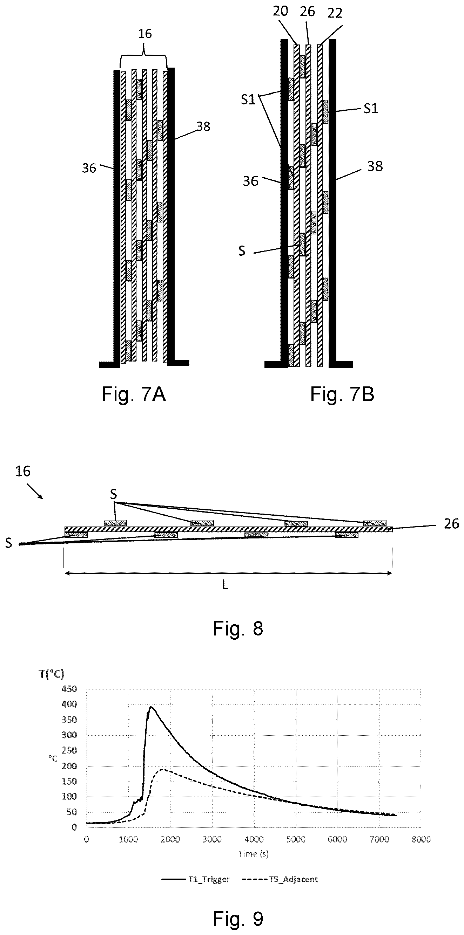

In a first embodiment, as visible in Fig. 7A, the first contact unit 36 is adapted to be in surface contact with a first battery cell 12 and is connected to the external surface of the first barrier plate 20. The second contact unit 38, adapted to be in surface contact with a second battery cell 14 is connected to the external surface of the second barrier plate 22.

In a second embodiment, depicted in Fig. 7B, spacers S1 are provided between the thermal barrier and the first and second contact units. These spacers S1 can be similar or identical to the spacers S provided within the spacer arrangement.

The first contact unit (of high thermal conductivity) is in facing contact with a first battery pack subassembly. Such a subassembly being, for example, an individual battery cell, or battery module comprising multiple cells, or a battery pack comprising multiple battery modules. And the second contact unit may be in facing contact with a second battery pack subassembly. The first and/or second contact unit may be sensibly L-shaped. The first and/or second contact unit may have a first portion adapted to contact the battery cell and a second portion adapted to contact the bottom plate. The second portion being sensibly orthogonal to the first portion.

The thermal fin 40 extends in a plane and defines a height, and a width, and a thickness. The thermal resistance within the plane is lower than the thermal resistance in a direction normal to the plane, that is across the thickness of the fin, such that the fin provides a thermal management function and a thermal safety function of the battery apparatus.

The thermal fin 40 is arranged such that the thermal resistance within the contact unit plane is lower than the thermal resistance in a direction normal to the plate or contact unit plane, such that the thermal fin ensures a thermal management function and a thermal safety function of a battery apparatus comprising battery cells and thermal fins extending between the battery cells.

The entire arrangement of the thermal barrier 16 and/or thermal fin 40 allows a high thermal resistance (low thermal conductivity) in a horizontal direction (between two adjacent cells or two adjacent battery subassemblies).

Fig. 8 shows a sixth embodiment of a thermal barrier 16 according to the invention comprising one intermediate plate 26, a first plurality of spacer at one side of the intermediate plate and a second plurality of spacers at a second side of the intermediate plate, opposite the first side. Such thermal barrier can for instance be arranged between two battery cells like prismatic or pouch cells.

Fig. 9 shows a graph depicting the temperature progress rate in a first battery cell (plain line) and a second adjacent battery cell (dotted line), wherein a thermal barrier according to the second embodiment (represented in Fig. 3) is arranged between the first and second battery cells. The first battery cell is a trigger cell and a thermal runaway event is induced in the trigger cell. Sensors are provided on the trigger cell, the adjacent cell and the bottom plate (an aluminium plate, as depicted in Fig. 1) to follow the temperature progress rate in the different elements and determine the performance of the thermal barrier 16 and more particularly the thermal transfer between two adjacent battery cells separated by the thermal barrier 16.

The test parameters are as follow: the first and second battery cells are prismatic Lithium-Ion Cells with dimensions 300x110x50 mm³. The thermal barrier is the one depicted in reference to Fig. 3 with a total thickness of about 0.8 mm in a rest position and about 0.6mm when compressed between the two cells. The thermal barrier 16 comprises graphite. A thermal event is induced in the trigger cell. As visible on the graph, the thermal runaway causes the trigger cell to have a temperature rising above 400 degrees in few minutes, and then the temperature decreases. Following the increase in temperature of the trigger cell, the temperature of the adjacent cell also increases, as visible in the graph, but it reaches only half of the temperature of the trigger cell. The heat transmission is thus limited and no loss function in the adjacent cell was visible despite the thermal runaway in the first cell.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein.
battery sub-assembly 10
first battery cell 12
second battery cell 14
thermal barrier 16
bottom plate 18
first and a second barrier plate 20, 22
spacer arrangement 24
intermediate plate 26, 26', 26"
first plurality of spacers 28
a second plurality of spacers 30
spacers S
a gap G
width w
length L
first thermally conductive plate 32
second thermally conductive plate 34
width ws
distance d
first and a second contact unit 36, 38
thermal fin 40
spacers S1

## Claims

1. Thermal barrier (16) for a battery apparatus (10) configured to prevent or delay thermal propagation between battery pack subassemblies, the thermal barrier (16) comprising a spacer arrangement (24) with at least one intermediate plate having a first surface and a second surface opposite the first surface, a first plurality of spacers (28) extending from the first surface and a second plurality of spacers (30) extending from the second surface.

2. Thermal barrier according to claim 1 wherein the intermediate plate and/or the first plurality of spacers and/or the second plurality of spacers are made in mica or paper material.

3. Thermal barrier (16) according to claim 1 or 2, comprising further a first and a second barrier plate (20, 22), the spacer arrangement extending between the first and second barrier plates, wherein the first and second barrier plate each comprise an internal surface facing the spacer arrangement and an external surface, opposite the internal surface, and wherein the first barrier plate and/or the second barrier plate is made in mica or paper material.

4. Thermal barrier (16) according to claim 3, comprising at least one electrically insulated component.

5. Thermal barrier (16) according to any of claims 1 to 4, comprising up to 10 intermediate plates, and wherein a plurality of spacers extends between two adjacent intermediate plates.

6. Thermal barrier (16) according to any of claims 1 to 5, wherein the thermal barrier (16) forms an entity satisfying the following condition:
weight per unit area < 0.20g/cm²
density< 200 g/cm³

7. Thermal barrier (16) according to claim 1 or 6, wherein the spacers (S) of the first and/or second plurality of spacers (28, 30) are strips distributed between the first or second barrier plate and one intermediate plate.

8. Thermal barrier (16) according to any of claims 1 to 6, wherein the spacers of the first and/or second plurality of spacers comprise a circular shape and are distributed between the first and/or second barrier plate and the intermediate plate.

9. Thermal barrier (16) according to claim 7 or 8, wherein the spacers of the first plurality of spacers are arranged above or below the spacers of the second plurality of spacers.

10. Thermal barrier (16) according to claim 7 or 8, wherein the spacers (S) of the first plurality of spacers are staggered with regard to the spacers of the second plurality of spacers.

11. Thermal barrier (16) according to any of claims 1 to 10, wherein the first and/or the second barrier plate and/ or the intermediate plate is between 50 and 300 µm thick.

12. Thermal barrier (16) according to any of claims 1 to 11, wherein each spacer is between 100 and 300 µm thick.

13. Thermal barrier (16) according to any of claims 1 to 12, wherein the spacers (S) are thicker than the first and/or the second barrier plate and/ or the intermediate plate.

14. Thermal barrier (16) according to any of claims 1 to 13, comprising a thermally conductive plate arranged between a first barrier plate (20) and the spacer arrangement (24) and/or between a second barrier plate (22) and the spacer arrangement (24).

15. Thermal fin (40) for a battery apparatus configured to prevent thermal propagation between battery pack subassemblies, the thermal fin comprising:
a first contact unit (36) adapted to be in facing contact with a first battery pack subassembly;
a second contact unit (38) adapted to be in facing contact with a second battery pack subassembly, and wherein a thermal barrier (16) according to any of claims 1 to 14 is sandwiched between the first and the second contact unit.
